**Europäisches Patentamt**

**European Patent Office**

**Office européen des brevets**

(19)

(11) Veröffentlichungsnummer: **0 094 094**
**B1**

(12) ## EUROPÄISCHE PATENTSCHRIFT

(45) Veröffentlichungstag der Patentschrift:
**18.12.85**

(51) Int. Cl.⁴: **C 05 F 9/02**

(21) Anmeldenummer: **83104655.2**

(22) Anmeldetag: **11.05.83**

(54) **Doppelmantel-Komposter.**

(30) Priorität: **11.05.82 DE 3217725**

(43) Veröffentlichungstag der Anmeldung:
**16.11.83 Patentblatt 83/46**

(45) Bekanntmachung des Hinweises auf die Patenterteilung:
**18.12.85 Patentblatt 85/51**

(84) Benannte Vertragsstaaten:
**AT BE CH FR GB LI NL SE**

(56) Entgegenhaltungen:
**DE - A - 1 657 005**
**DE - A - 2 007 755**
**DE - A - 2 620 977**
**DE - A - 2 947 297**
**DE - A - 3 015 164**
**DE - A - 3 019 253**
**GB - A - 824 391**
**GB - A - 1 598 284**
**GB - A - 2 038 304**
**US - A - 4 105 412**

(73) Patentinhaber: **Döring, Erich, Dr., Im Hölzeli,
CH-9442 Berneck (CH)**

(72) Erfinder: **Döring, Erich, Dr., Im Hölzeli, CH-9442 Berneck
(CH)**

(74) Vertreter: **Behrens, Dieter, Dr.-Ing. et al, Patentanwälte
WUESTHOFF-V. PECHMANN-BEHRENS-GOETZ
Schweigerstrasse 2, D-8000 München 90 (DE)**

ACTORUM AG

## Beschreibung

Die Erfindung betrifft einen Komposter für Gartenabfälle wie er in Hausgärten oder in Kleingärten benutzt wird. Solche Komposter werden für Abfälle aus Garten, Küche u.dgl. verwendet. Sie werden auch als Gartenkomposter bezeichnet.

Es ist aus der DE-A1 30 19 253 ein doppelwandiger Gartenkomposter bekannt, dessen im Querschnitt runder oder rechteckiger Aussenmantel aus Stahlblech und dessen runder Innenmantel aus Drahtgitter besteht. Der Abstand zwischen dem Aussenmantel und dem Innenmantel beträgt im allgemeinen etwa 2 bis 5 cm und wird durch Abstandshalter in Form von Drahthaken sichergestellt, die über den oberen Rand von Innen- und Aussenmantel gesteckt sind. Beide Mäntel ruhen unmittelbar auf dem Erdboden auf.

Es ist aus der US-C1 41 05 412 ein im Querschnitt runder Doppelmantel-Gartenkomposter bekannt, dessen beide Mäntel auf einem runden Behälter zum Auffangen von Kompostbrühe aufruhen. Der Aussenmantel ist geschlossen. Der Innenmantel ist als Sieb ausgebildet und dazu längsprofiliert und in den Längsrillen mit Luftlöchern versehen. Der runde Innenmantel hat eine untere, zur Seite wegschwenkbare kleine Tür zur Entnahme von Kompost.

Komposter werden vielfach mit deckelartigen Abdeckungen versehen und sind meist ebenfalls aus Blech ein- oder zweiteilig ausgebildet. Unzerlegbare Komposter lassen sich nur aufwendig transportieren und im Winter schlecht verstauen.

Im Gebrauchs- oder Funktionszustand sind die bekannten Gartenkomposter, sofern sie zylindrisch oder im Querschnitt rechteckig oder quadratisch sind, im Querschnitt bzw. Durchmesser nicht veränderbar. Der Querschnitt dieser Komposter ist ohne Hinzufügung oder Herausnahme von Teilen und ohne zusätzliche Anbringung von Bohrungen für Befestigungselemente weder vergrösserbar noch verkleinerbar.

Bekanntlich soll das zu kompostierende Material nicht faulen sondern langsam verrotten. Zum Verrotten sind Sauerstoff, Dunkelheit und Wärme nötig. Gras, Laub und Gartenabfälle müssen ihre Feuchtigkeit abgeben können, da sie anderenfalls zusammenkleben und faulen. Wind, zuviel Feuchtigkeit und Licht behindern das langsame, sachgemässe Verrotten. Fäulnis oder Dürre sind die Folge.

Durchbrüche am Mantel sollen Sauerstoff zu- und Feuchtigkeit abführen, um das Faulen zu verhindern. Diese Funktion erfüllen die bekannten Durchbrüche jedoch nur begrenzt. Selbst ein Belüftungsrohr im Zentrum (DE-A1 26 20 977) setzt der Luft- bzw. Sauerstoffzuführung und der Feuchtigkeitsabfuhr enge Grenzen. Wird der Komposter nicht, wie allgemein empfohlen, im Schatten aufgestellt sondern steht er in der Sonne, kann das zu kompostierende Material auf der Sonnenseite brennend heiss werden, während es auf der Schattenseite sehr kalt bleibt. Dies fördert die Verrottung nicht.

Diejenigen Komposter, die nach aussen führende Belüftungsöffnungen aufweisen, haben den Nachteil, dass noch so viel Licht eintreten kann, dass Wurzeln und Samen zum Wachsen angeregt werden und die Rotte verlangsamt wird. Bei solchen, einwandigen Kompostern kann auch Wind und Kaltluft zu intensiv auf das Kompostgut einwirken. Auch dieses verlangsamt das Verrotten.

Der Erfindung liegt die Aufgabe zugrunde, einen ideale Verrottungsbedingungen schaffenden Komposter anzugeben, bei dem einseitige Überhitzung des Kompostgutes vermieden ist und der preiswert im Aufbau ist.

Zur Lösung dieser Aufgabe ist bei einem Doppelmantel-Komposter für Gartenabfälle mit einem direkt auf den Erdboden aufsetzbaren, im wesentlichen geschlossenen, im Querschnitt rechteckigen Aussenmantel und einem von diesem wenigstens einen kleinen Abstand haltenden luftdurchlässigen, insbesondere rechteckigen, Innenmantel erfindungsgemäss vorgesehen, dass an wenigstens einer Seitenwand des Aussenmantels wenigstens ein schräg verlaufendes, nach innen abstehendes Warmluft-Leitblech angebracht ist, das den Innenmantel im erforderlichen Abstand vom Aussenmantel hält.

Dadurch wird die im Zwischenraum zwischen den beiden Mänteln entstehende und aufsteigende Warmluft in die Kaltzone geleitet und der richtige Abstand zwischen den Mänteln gewährleistet, ohne dass es dazu besonderer Halterungen an Deckel und Boden oder separater Abstandshalter bedarf.

Ein Ausführungsbeispiel eines erfindungsgemässen Gartenkomposters ist anhand einer Zeichnung näher erläutert, in der zeigt:

Fig. 1 eine Schrägansicht einer ersten Ausführungsform eines Gartenkomposters im geschlossenen Zustand, und

Fig. 2 den Gartenkomposter nach Fig. 1, jedoch mit abgenommenem Deckel und einer abgenommenen Seitenwand des Aussenmantels.

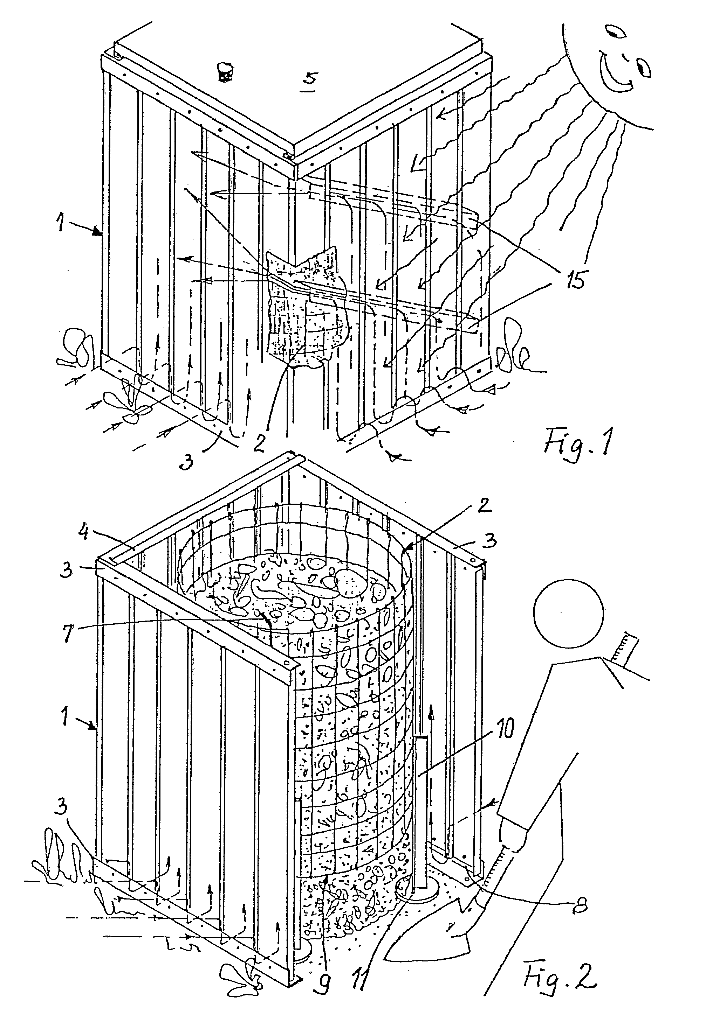

Der Gartenkomposter gemäss Fig. 1 ist als kubischer Behälter aus einem im Querschnitt quadratischen Aussenmantel 1 bzw. Aussenbehälter und einem innerhalb von diesem angeordneten, einen geringen Abstand haltenden Innenmantel 2 bzw. Innenbehälter von kreisrundem Querschnitt aufgebaut. Die rechteckigen Seitenwände des Aussenmantels bestehen aus Profilblech und sind jeweils am oberen und unteren Rand mit einem Winkelprofil 3 verstärkt. Die Anbringung ist derart, dass die mit den Seitenwänden beispielsweise vernieteten oder verschraubten Winkelprofile 3 mit ihrem zur Wand senkrechten Schenkel einen kleinen Abstand von der Ober- und Unterkante haben, so dass eine Be- und Entlüftung längs der Wand möglich ist, siehe die in Fig. 2 eingezeichneten gestrichelten Pfeillinien am unteren Rand der Seitenwände. Dadurch entstehen abgedeckte Belüftungsöffnungen 8. Die vier Seitenwände sind über die Winkelprofile 3 miteinander verschraubt. Eine Seitenwand ist abnehmbar an den angrenzenden Seitenwänden angebracht oder mit einem Scharnier an der angrenzenden Seitenwand abschwenkbar angelenkt. Auf diese Weise lässt sich der Aussenmantel 1 bequem öffnen. An zwei gegenüberliegenden Kanten des oberen Randes des Aussenmantels 1 sind Führungsschienen 4 für einen Deckel 5, sh. Fig. 1, angebracht. Der Deckel 5 greift mit entsprechenden Rändern in die Führungsschienen 4 derart ein, dass er nur verschieblich ist.

Der Innenmantel 2 ist aus einem kräftigen Drahtgitter gefertigt und hat einen runden Querschnitt. Im Bereich der Stossstelle, an denen die Ränder des Drahtgitters übereinandergelegt sind, ist der Innenmantel mittels einer durch die Randmaschen durchgeführten Stange 7 verschlossen.

Der Innenmantel 2 ruht auf wenigstens drei an seiner Aussenseite in gleichem Winkelabstand angebrachten Füssen 10, die über den unteren Rand 9 des Innenmantels 2 um wenigstens 20 cm vorstehen. Am unteren Ende der Füsse 10 sind runde Platten 11 angebracht, die aufgrund der grösseren Aufstandsfläche ein Einsinken des Innenmantels 2 in den Erdboden verhindern.

Auf der der Sonne zugewandten Seite des Komposters entsteht ein besonders warmes Luftpolster. Um zu erreichen, dass diese aufsteigende Warmluft auch in kältere Zonen des Komposters geleitet wird, sind auf der Innenseite der abnehmbaren Seitenwand des Aussenmantels 1 Warmluft-Leitbleche 15 in Form von Winkel- oder Profilen schräge (s. Fig. 1) mit einem Schenkel nach innen abstehend angebracht. Die aufsteigende Warmluft wird so zu den kälteren Seiten geleitet. Da sich eine Zirkulationsströmung einstellt, kommt es auch zur Erwärmung der an sich kälteren Seiten. Solche Warmluft-Leitbleche 15 können auch an gegenüberliegenden oder angrenzenden Seiten angebracht sein. Sie dienen gleichzeitig dazu, den Innenmantel 2 im erforderlichen Abstand vom Aussenmantel 1 zu halten.

## Patentanspruch

Komposter für Gartenabfälle mit einem direkt auf den Erdboden aufsetzbaren, im wesentlichen geschlossenen, im Querschnitt rechteckigen Aussenmantel (1) und einem von diesem in kleinem Abstand gehaltenen luftdurchlässigen, insbesondere rechteckigen, Innenmantel (12), dadurch gekennzeichnet, dass an wenigstens einer Seitenwand des Aussenmantels (1) wenigstens ein schräg verlaufendes, nach innen abstehendes Warmluft-Leitblech (15) angebracht ist, das den Innenmantel (2) im erforderlichen Abstand vom Aussenmantel (1) hält.

## Claim

Composting device for garden garbage and waste, the device having a substantially closed outer shell (1) of rectangular cross-sectional shape, capable of being placed directly on the ground, and an inner shell (12), especially of rectangular shape and permeable to air, which is maintained at a small distance from the outer shell (1), characterized in that at least one inclined warm air baffle plate (15), which is protruding towards the interior, is attached to at least one side wall of the outer shell (1), this baffle plate (15) maintaining the inner shell (2) at the required distance from the outer shell (1).

## Revendication

Installation de compostage pour ordures jardinières, comprenant une enveloppe extérieure (1) généralement fermée, d'une forme rectangulaire en coupe transversale et pouvant être placée directement sur le sol, et un corps intérieur (12) qui, perméable à l'air et de préférence d'une forme rectangulaire, est maintenu à une faible distance de l'enveloppe extérieure (1), caractérisée en ce que, sur au moins une paroi latérale de l'enveloppe extérieure (1), au moins une chicane déflectrice d'air chaud (15) est montée inclinée en saillie vers l'intérieur, cette chicane (15) maintenant le corps intérieur (2) à la distance nécessaire de l'enveloppe extérieure (1).

Fig.1

Fig.2